# EUROPEAN PATENT APPLICATION

(11) **EP 1 396 675 A1**
(43) Date of publication of application: **10.03.2004**
(21) Application number: 03102682.6
(22) Date of filing: 01.09.2003
(51) Int. Cl.: F16L 59/14, F16L 57/04

(54) **Fire protection device**

(30) Priority: 05.09.2002 JP 2002260195
(71) Applicant: TOSETZ CO. LTD., Tokyo 108-0014 (JP)
(72) Inventor: Imamura, Minoru, 108-0014 Tokyo (JP); Yagishita, Nobuki, 108-0014 Tokyo (JP)
(74) Representative: King, James Bertram

(57) **Abstract**

Mass produced fire protection device which can be placed over a pipe has one expandable slot (3) provided on a cylindrical body (1) and is made from thermally expanding graphite, thermally expanding rubber, or thermally expanding resin as a main component thereof, the slot (3)extending in a longitudinal direction and with a pipe entrance section (4) at an end of the slot (3) enabling a pipe (20) to be located or removed in a one hand operation.

## Description

This invention relates to a fire protection device being an insertion member which can easily be positioned or removed by hand and a method of producing the device by injection moulding.

The fire protection device of this invention is installed on piping or cables provided in a fire protection zone to prevent flame, gas, smoke or the like from spreading via a through-holes provided for the piping or cable. When a fire breaks out, the fire protection device expands due to heat of the fire, and blocks the through-hole. Generally a thermally expanding rubber or thermally expanding resin is used as a material for the fire protection device.

The conventional type of fire protection device is accommodated within a square or circular metallic casing, and one based on a simple construction is disclosed in Japanese Patent Application No. JP H08-245833. This fire protection device is based on the one-touch operation system having a thermally expanding member provided on a C-shaped elastic metal plate. This fire protection device can easily be mounted, but the thermally expanding member is mounted on the metal plate later, so that time is required for manufacturing the same.

To solve this problem Japanese Patent Application No. 2000-92609 (Japanese Patent Laid-Open Publication No. 2001-280550) provides for a fire protection device manufactured by cutting an elongate cylindrical body and then providing an expanding slot on each cut portion so that the cost can be minimised and the member can be mounted with a one hand operation.

For manufacturing this type of fire protection device, however, as a thermally expanding material is extruded from an extruder to form an elongate cylindrical body and the cylindrical body is then sliced, a long period of time is required for manufacture and, in addition, sometimes problems occur as the elasticity is not sufficient in the extrusion-moulded product, or that, in a case where, for instance, a product with a metal sheet adhered on the surface is to be produced, the metal sheet is adhered thereto later. Further as only one expanding slot is provided in the fire device, it is necessary, when mounted on piping, to open the expanding slot to the size allowing the piping to pass therethrough, to open the expanding slot to the outer diameter of the piping the work must be done with two hands. In addition, when removing it from the piping, it is necessary to insert a tool for opening, and also a large work load is required for removing it from the piping, which is disadvantageous.

In the fire protection device having a cylindrical form, the cross section is round, and it can be opened making use of the expanding slot, so that displacement never occurs after mounting when the outer diameter of the piping to which the member is mounted is equal to or larger than an inner diameter of the fire protection device. When the outer diameter of the piping is smaller than the inner diameter of the fire protection device, the joint between the two components is loose, and the position cannot be fixed. In this case, especially when the member is mounted on vertical piping, the member may drop downward due to the gravity, and to prevent this it is necessary to temporally fix the member with mortar or putty, and this work also required an additional work load.

Further a number of fire protection devices having different sizes respectively must be prepared, so that many types of members are required, which results in higher production cost.

It is an object of this invention to provide a fire protection device which can easily be mounted and removed by means of a one hand operation onto and off of piping having various diameters over in a wide range as well as to provide a method for injection moulding same.

According to one aspect this invention provides a fire protection device formed from thermally expanding graphite, thermally expanding rubber, or thermally expanding resin as a main ingredient with one expandable slot provided on the cylindrical body in the longitudinal direction thereof, wherein a pipe inlet section is provided at an entrance of the expandable slot.

According to another aspect of this invention there is provided a method of injection moulding a fire protection device comprising the steps of:
filling a melted material containing any of thermally expanding graphite, thermally expanding rubber, or thermally expanding resin as a main ingredient thereof in a die for injection moulding;
waiting until the material is cooled and solidified to form a fire protection device with one expanding slot formed on the cylindrical body in the longitudinal direction and also with an piping inlet section or piping inlet sections formed at an entrance or entrances of the expanding slot.

A further development of the method of injection moulding includes the steps of:
inserting an metal plate or metal plates inside the die previously; and
performing injection moulding to in-mould the metal plate or metal plates on the entire external peripheral surface or on portions of the external peripheral surface of the product.

This invention is further described and illustrated by way of example in the following and with reference to the drawings, wherein:
Fig. 1(A) is a perspective view showing the general configuration of a fire protection device according to an embodiment of the present invention ;
Fig. 1(B) is a plan view of the device of Fig. 1;
Fig. 2 shows the fire protection device being positioned on piping;
Fig. 3 shows the fire protection device set on the piping;
Fig. 4 is a cross-sectional view taken along the line A-A'of Fig. 3;
Fig. 5 shows the fire protection device being removed from the piping;
Fig. 6(A) shows a piping inlet section formed at each of the two edges of an expanding slot;
Fig. 6(B) is a plan view showing the same;
Fig. 7(A) shows a V-shaped piping inlet section is formed at an edge of the expanding slot;
Fig. 7(B) is a plan view showing the same;
Fig. 8(A) shows a V-shaped piping inlet section formed at each of the two edges of the V-shaped expanding slot;
Fig. 8(B) is a plan view showing the same;
Fig. 9(A) shows a metal plate adhered to substantially the entire surface of an external peripheral surface of the fire protection device;
Fig. 9(B) is an explanatory view showing a case where metal plates are adhered on the two side faces of the fire protection device;
Fig. 10 shows piping is protected from fire with a fire protection device with a metal plate adhered thereon;
Fig. 11 shows another case where a V-shaped cut is provided along the expanding slot;
Fig. 12 shows a fire protection device in which a cross section of the cylindrical body is oval.
Fig. 13 is a cross-sectional view showing the fire protection device shown in Fig. 12;
Fig. 14 shows the fire protection device set on piping with a small diameter;
Fig. 15 shows the fire protection device set on piping with a large diameter; and
Fig. 16 shows the fire protection device according to the present invention being formed using an injection moulding machine.

A main ingredient of the thermally expanding section is thermally expanding graphite, thermally expanding rubber, or the so-called thermally expanding resin, and an example of a composition is as shown in Table 1.

**Table 1**

| **Components of thermally expanding rubber** | **Blending ratio** **by weight(%)** |
|---|---|
| Flame-resistant rubber (Chloroprene rubber) | 40-50% |
| Inorganic filler (Aluminium silicate, silicic acid etc.) | 10-15% |
| Inorganic expanding material (graphite-based) | 20-25% |
| Softener (paraffin-based) | 10-15% |
| Metal oxide (zinc oxide, magnesium oxide) | 3-5% |
| Anti-ageing material | 0.5-1.0% |
| Vulcanisation accelerator | 0.5-1.0% |

The thermally expanding graphite, thermally expanding rubber, and thermally expanding resin are melted at a temperature not higher than that at which thermal expansion occurs and formed into a cylindrical shape using an injection moulding machine, and an extruder (cylinder) and a die each used for moulding the normal thermoplastic resin can be used for injection moulding the materials.

It is preferable to form the expanding slot with the minimum width assuming that the slot expands according to an outer diameter of piping on which the cylinder is set. The desired performance can not be achieved when the cylinder is set, if the expanding slot expands excessively, and therefore sometimes it is required to prepare several types of cylinders with expanding slots each having a different size respectively. It is to be noted that the problem can be mitigated by forming the cylindrical body with an oval form.

The diagonal cut as a piping inlet section provided at an edge of the expanding section may be a linear one or a slightly arched one. Further the diagonal cut may be provided by cutting a corner of the edge section or by cutting both of the corner sections so that a V-shaped cut section is provided there. In addition, the cut section may be provided either in one side of an entrance the expanding slot or in both sides of the entrance, so that the piping can be set in or removed from either side.

When the fire protection device is set on piping or the like, the diagonally cut section provided at an entrance of the expanding slot is pressed in the diagonal direction against the piping or the like, the expanding slot opens due to actions of the diagonally cut section. Further, when the fire protection device is pressed to the piping or the like along the expanding slot keeping the position of the fire protection device slanted against the piping or the like, the expanding slot gradually opens from the diagonally cut section, so that the piping or the like can easily be accommodated therein. Further, when removing, the fire protection device is pulled off from the piping inlet section side.

The cylinder having an oval cross section can be applied to piping having a diameter equal to or larger than a smaller diameter of the oval on the condition that the cylinder can be applied to the piping when the cylinder is opened at the expanding slot.

### Example 1

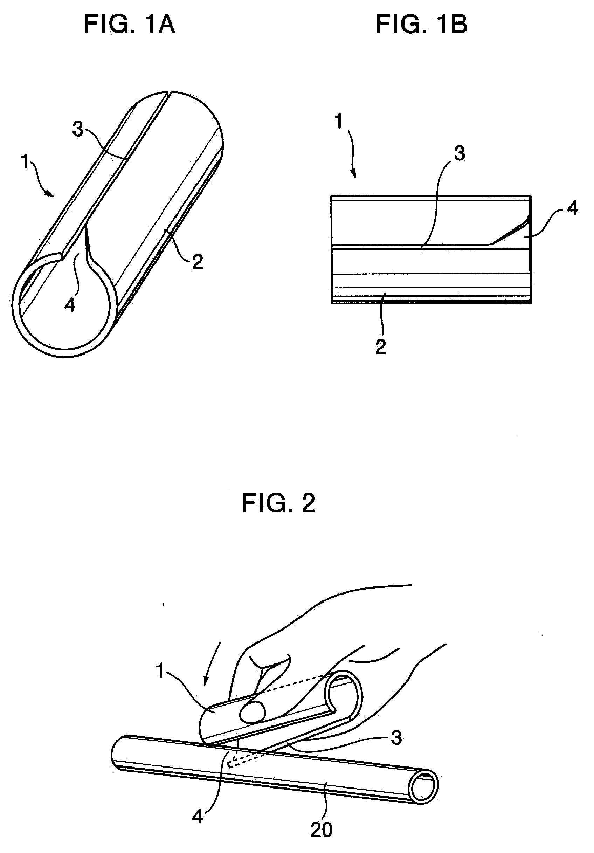

This example corresponds to the invention defined in claims 1 to 5, and a fire protection device 1 has an expanding slot 3 provided on its cylindrical body 2 and extending in the longitudinal thereof as shown in Fig. 1 (A) and Fig. 1 (B), and a piping inlet section 4 is provided by cutting a corner of one edge of the expanding slot 3.

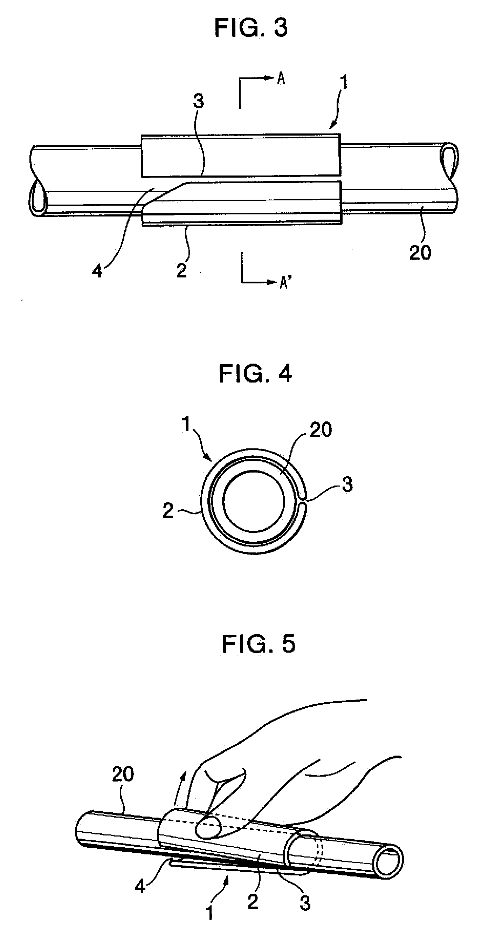

When the fire protection device 1 is set on piping 20, the piping inlet section 4 is pressed to the piping 20 keeping the orientation of the fire protection device 1 in the slanted state and is slid along the expanding slot 3 gradually falling the member 1 toward the piping 20, when the expanding slot 3 gradually opens and the piping 20 is accommodated within the member 1. Fig. 3 and Fig. 4 show the state where the piping 20 has been set within the fire protection device 1.

When the fire protection device 1 is removed from the piping 20, it can be removed therefrom by raising the side of the piping inlet section 4 to gradually open the expanding slot 3 from the side of this piping inlet section 4.

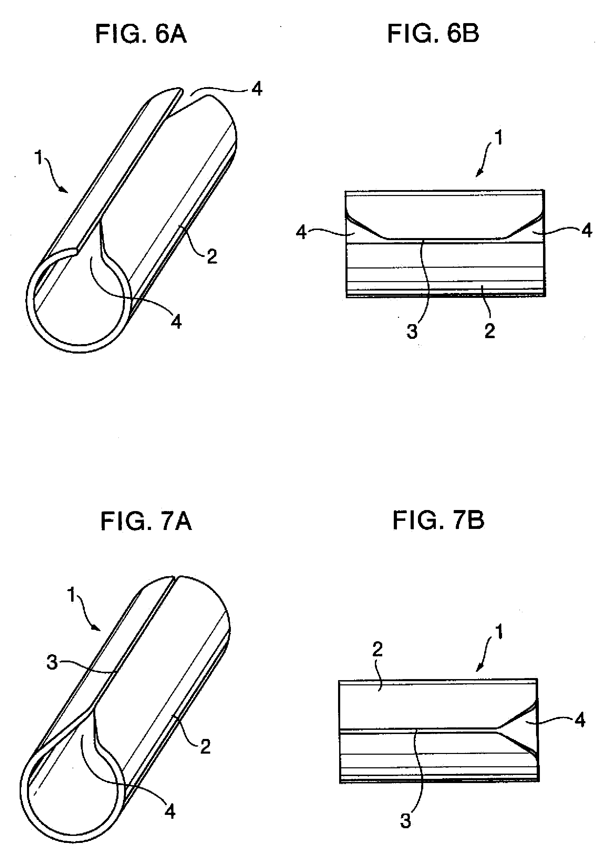

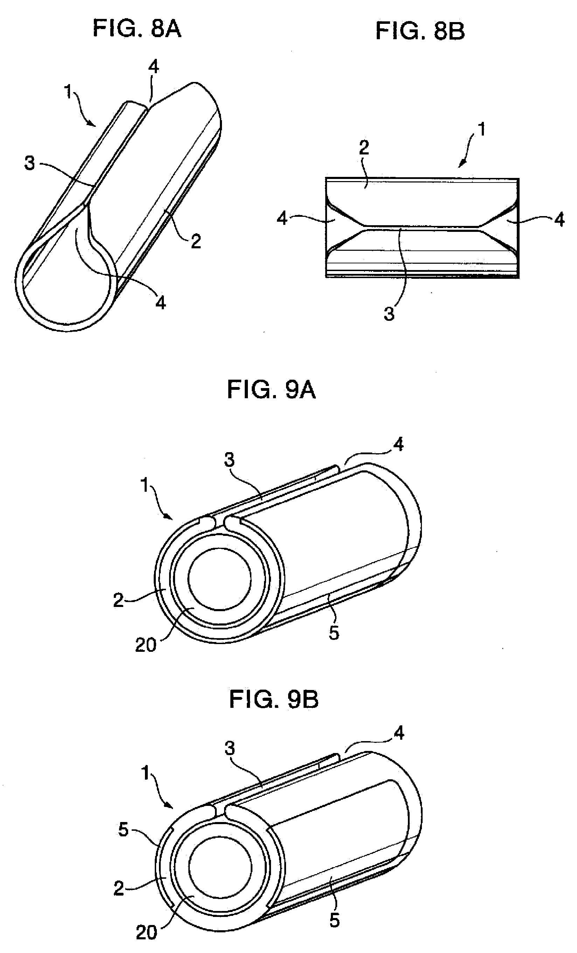

Fig. 6(A) and Fig. 6(B) show a case where the piping inlet sections 4 are provided at two edge sections of the expanding slot 3 (according to claim 3); Fig. 7(A) and Fig. 7(B) show a case where a V-shaped piping inlet section 4 is provided at an edge of the expanding slot 3; and Fig. 8(A) and Fig. 8(B) shows a case where the V-shaped piping inlet sections 4 are provided at both edges of the expanding slot 3.

Although each of the piping inlet sections 4 in the examples above is straight cut, the piping inlet section 4 may be cut in an arched form.

Fig. 9(A) and Fig. 9(B) respectively show a case where a metal plate 5 is attached to the substantially entire external peripheral surface or on both side faces of the fire protection device 1, and Fig. 9(A) shows a case where the metal has been attached to the substantially entire peripheral surface of the fire protection device 1, while Fig. 9(B) shows a case where the metal sheets are attached to both side faces of the fire protection device 1.

The configuration in which the metal plate 5 is attached to the external peripheral surface of the fire protection device 1 is employed to prevent the error that, when two piping 20, 20a are inserted through a through-hole on a fire protection zone partition wall 21, if the fire protection devices 1 set on the adjoining two piping thermally expand and directly each other, the two sections interfere each other to spoil the performance. Therefore, when only one piping requiring fire protection is installed, the fire protection device 1 having no metal plate 5 attached thereto may be used.

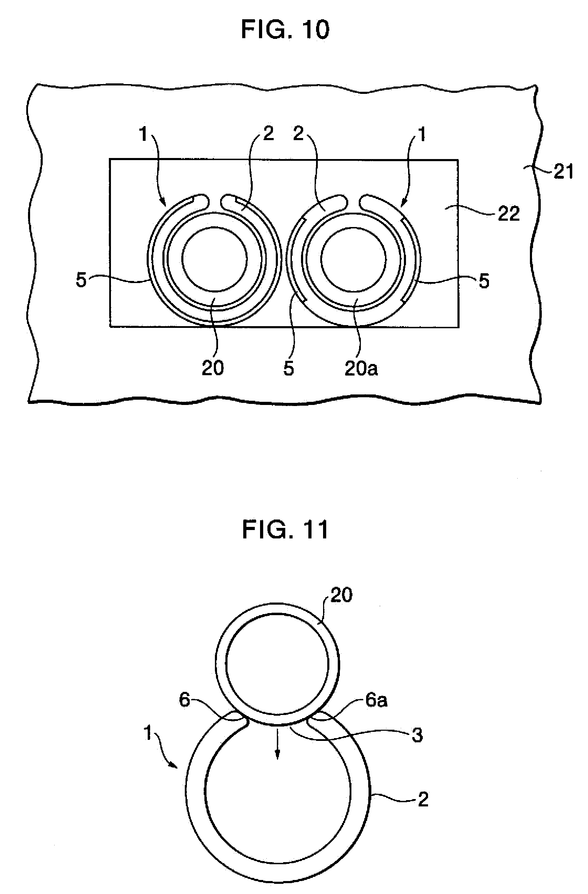

Fig. 11 shows a case where V-shaped cut sections 6, 6a are provided along the expanding slot 3 in the longitudinal direction, and in this case when the piping 20 is pressed to the expanding slot 3, the fire protection device 1 opens, and the piping 20 can be accommodated within the fire protection device 1 through the expanding slot 3.

### Example 2

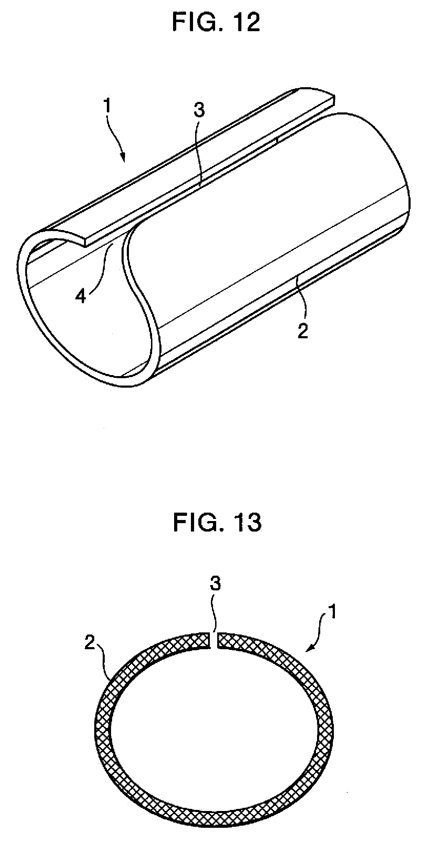

Example 2 correspond to the invention defined in claim 2 in which the cylindrical body 2 has an oval cross section. The fire protection device 1 in this example 2 has an oval cross section with a piping inlet section 4 provided at one edge of the expanding slot 3 as shown in Fig. 12 and Fig. 13.

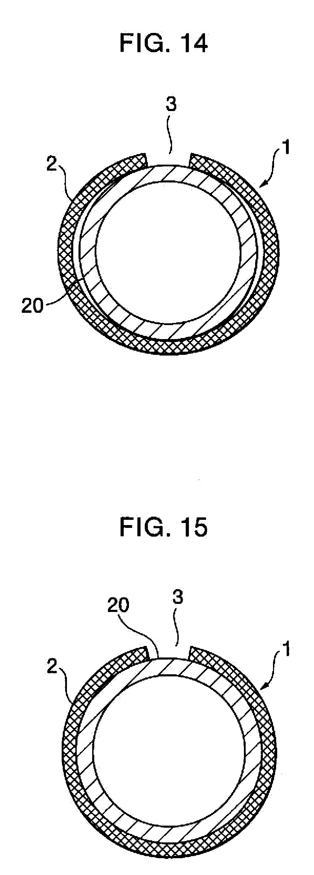

Because of this feature, the fire protection device 1 can be applied to piping with an external diameter in a wide range from that equal to an inner diameter of the fire protection device 1 in the smaller diameter side thereof as shown in Fig. 14 up to that larger than the inner diameter in the larger diameter side thereof as shown in Fig. 15.

### Example 3

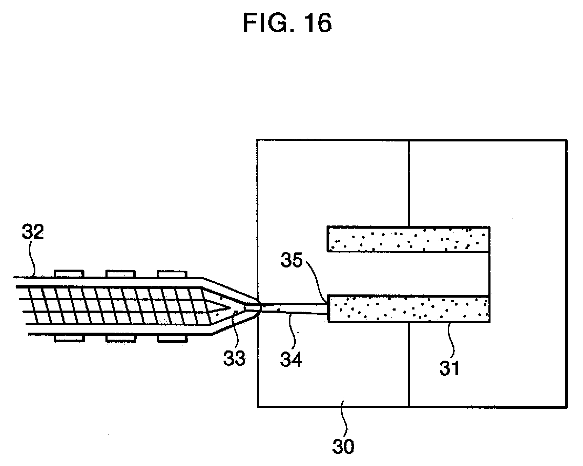

Example 3 corresponds to the invention defined in claims 6 and 7, and more specifically, the fire protection device 1 is moulded with an injection moulding machine (as shown in Fig. 16) in this example.

In Fig. 16, the reference numeral 30 indicates a die, and a cavity 31 is formed within this die 30. Through filling molten thermally expanding graphite 33 in this cavity 31 via duct 34 and a opening 35 from a cylinder 32, the fire protection device 1 as shown in Fig. 1 to Fig. 8, or the fire protection device 1 with the metal plate 5 shown in Fig. 9 moulded therewith, or that having an oval cross section as shown in Fig. 12 or Fig. 13 can be formed.

As described above, in the present invention, any one of thermally expanding graphite, thermally expanding rubber, and thermally expanding resin can be formed into a cylindrical shape with an expanding slot provided thereon to provide a fire protection penetrating member, and a piping inlet section (cut) is provided at an edge (entrance) of the expanding slot, so that the fire protection device can easily be set on or removed from piping or cabling with a one-touch operation (claims 1 to 4).

In the fire protection device made from thermally expanding graphite, thermally expanding rubber, or thermally expanding resin according to the present invention, a metal plate is attached to the entire peripheral surface or to some portions thereof, so that mutual interference never occurs, even if a plurality of pipes or the like pass through one through-hole side by side, when the piping or the like thermally expands, and therefore the performance can fully be achieved (claim 5).

Further the fire protection device according to the present invention has an oval cross section in one embodiment thereof, so that the member can be applied to piping with a diameter in a wide range, and therefore the required dimensional types of the product can be reduced, which allows reduction of the manufacturing cost (claim 2).

Further as the fire protection device according to the present invention can be manufactured by means of injection moulding, so that the productivity is very high and can be manufactured with low cost. In addition, as the known in-moulding method can be employed for attaching a metal plate to an external peripheral surface of the fire protection device, even the fire protection device with a metal plate attached thereto can be produced with low cost (claims 6, 7).

## Claims

1. A fire protection device (1) formed from thermally expanding graphite and/or thermally expanding rubber and/or thermally expanding resin as a main component, the device being formed as an expandable cylindrical body (2) with an expansiob slot (3) provided in the cylindrical body (2) extending in the longitudinal direction thereof, **characterised in that** a pipe entry section (4) is located at an end of the slot (3) forming an entrance for a pipe (20) to facilitate expansion of the slot (3).

2. A fire protection device according to claim 1, wherein the cylindrical body (2) has an oval cross section.

3. A fire protection device according to claim 1 or 2, wherein the pipe entry section (4) is provided at one side edge at the end of the slot (3).

4. A fire protection device according to claim 1 or 2, wherein pipe entry sections (4) are provided at both sides of the end of the expansion slot (3).

5. A fire protection device according to any one of claims 1 to 4, wherein a metal plate (5) or metal plates are adhered over the entire external peripheral surface or in several discrete locations on the peripheral surface.

6. A fire protection device according to any one of claims 1 to 5, wherein the pipe entry section (4) is formed by one or both sides at an end of the slot (3) diverging towards the opening into the slot.

7. A fire protection device according to claim 6, wherein the sides diverge in a linear or in an outwardly curving manner and at one or both sides of the slot opening (3).

8. A fire protection device according to any one of claims 1 to 7, wherein a pipe entry section (4) is formed at both ends of the slot (3).

9. A method of injection moulding a fire protection device comprising the steps of:
a) filling an injection moulding die with molten material containing any one of thermally expanding graphite, thermally expanding rubber, or thermally expanding resin as a main component thereof;
b) the die having a slot forming member for the cylindrical body extending in the longitudinal direction thereof and with a pipe entrance forming means or pipe entrance forming section at an end or ends of the slot forming member;
c) allowing the material cool and solidify to form the fire protection device;

10. A method of injection moulding a fire protection device according to claim 9, further comprising the steps of:
a) inserting an metal plate or metal plates inside the die; and
b) carrying out injection moulding to mould in the metal plate or metal plates on the entire external peripheral surface of the device or on discrete portions of the external peripheral surface of the device.
